# EUROPEAN PATENT SPECIFICATION

(11) **EP 1 243 875 B1**
(45) Date of publication and mention of the grant of the patent: **28.01.2004**
(21) Application number: 02076084.9
(22) Date of filing: 20.03.2002
(51) Int. Cl.: F24J 3/08

(54) **Geothermal pile having a cavity through which a fluid can flow**
Geothermischer Pfahl mit Hohlraum zum Durchfluss eines Fluides
Pieu géothermique avec cavité pour écoulement d'un fluide

(30) Priority: 20.03.2001 NL 1017655
(43) Date of publication of application: 25.09.2002
(73) Proprietor: BETON SON B.V., NL-5692 CJ Son (NL)
(72) Inventor: Poot, Simon Jacob, 4247 EX Kedichem (NL)
(74) Representative: Prins, Adrianus Willem

(56) References cited:
- EP-A- 0 582 118
- WO-A-80/02736
- DE-A- 3 600 230
- DE-A- 4 437 124
- US-A- 4 286 651

## Description

The invention relates to a geothermal pile provided with a cavity extending in axial direction and closed off at both ends and suitable for creating a circulating fluid flow in the cavity by separating means to be provided over at least a considerable part of the length of the cavity, such as pipes or hoses, which can be coupled to a fluid circulation circuit located outside the pile.

During the daytime, the surface of the earth heats up by the sun and cools down again at night, the extent to which this occurs also being dependent on the season. These changes in temperature resulting from the day and night pattern and the influence of the seasons have their effect on the ground up to a specific depth. From a specific depth, roughly calculated from 2 meters down, the soil temperature is more or less constant. By placing below that depth a heat exchanger in the form of a geothermal pile, as referred to in the opening paragraph and known from US-A-4,286,651, it is possible, dependent on the soil temperature at the surface, to accomplish a heating or a cooling. The pile referred to, together with a set of similar piles, is formed in the vicinity of a building which is to be heated or cooled by driving into the ground a pipe with a foot element in which the pile, manufactured from a non-metallic material, preferably plastic, is placed, whereupon the pipe, while leaving behind the foot element and the pile, is pulled from the ground again. In the final situation, the upper side of the pile is located at some distance below the ground level. By having a fluid circulate through the hollow pile by means of a heat pump installation, the pile obtains the function of a heat exchanger between the fluid and the ground surrounding the driven pile.

For realizing such an energy pile, it is further known, from WO-A-8-/02736, to use a driven pile. There, the driven pile is manufactured from steel, extending through the foundation and, for instance by means of welding, being provided with flanges for supporting the foundation on the pile. Considering the relatively small bearing capacity of such steel piles, a considerable number of piles are required to arrive at the desired construction, which is disadvantageous from the viewpoint of costs.

The object of the invention is to provide a geothermal pile in the form of a driven pile, where putting the geothermal function into action can be effected at any desired moment, more in particular also after all building activities have been completed in the customary manner and even after the respective construction has been in use for a shorter or longer period of time. What is further contemplated with the invention is to render designing the driven pile as a geothermal or optionally geothermal pile simpler and cheaper.

According to the invention, this is achieved when the pile is designed as a hollow, driven pile manufactured from concrete with the aid of an extrusion method, which pile is permanently closed off at one end and, at the other end, carries a connecting piece closing off the cavity, which can serve for the connection to a foundation of a building and is provided with at least one connecting stub which, on one side, is in communication with the cavity and, on the other side, terminates at an angle, which is preferably 90°, relative to the axial direction of the driven pile, beyond the end and at or outside the imaginary prolonged circumferential surface of the driven pile. With these features, a hollow, concrete driven pile can be manufactured, which, by simply permanently closing off the one end and placing the connecting piece on the other end, is transformed into an energy pile, while the total costs are in the order of those of a traditional, solid, concrete driven pile. The closure can be effected, for instance, with a plate or a plug of filling material such as concrete, which closure is also preferred from the point of view of driving. By using a connecting piece with laterally terminating connecting stub(s), the possibility is created to fully complete the construction without having to defer the finishing of the foundation beam until the connecting stubs have been connected to further ducts. This is because the connecting stub or stubs can be included in the foundation beam such that, afterwards, they always remain accessible but, when not used, are located completely out of sight and, therefore, do not disturb further activities before and after construction. Furthermore, this means that the installation of the system can be put into use at any desired moment, therefore also long after all building activities have been completed. This possibility is in particular appealing because the costs for such a driven pile are in the order of those of a traditional driven pile, so that in fact later, without additional costs, the construction can still be rendered suitable to be used as an energy system. Here, it should be considered that, in view of ever increasing energy costs and an increasing energy consciousness, for the future, this can be an extremely useful option. Furthermore, remaining accessible during use after installation has its advantages regarding, for instance, inspection, repair, maintenance and replacement.

In relation to the heat conduction of the hollow, concrete driven pile it is noted that, on the one hand, it is determined by the surface in the cavity which is in contact with the fluid and the manner of flowing, laminar or turbulent, along that surface and, on the other hand, by the heat supply and discharge through the ground surrounding the pile, hence the heat conductivity of the soil. With hollow, concrete driven piles, relatively large inner diameters and a turbulent flow along the inner surface can be provided. The fact that concrete has a lower heat conductivity than, for instance, steel, is then of less importance.

As noted, the separation means can consist of a hose which is inserted via a connecting stub into the driven pile to a point near the bottom end of the cavity. The discharge of the circulating fluid can be effected by a further hose reaching via the connecting stub just beyond the connecting piece into the hollow cavity. However, what is preferred according to a further embodiment of the invention is that the connecting piece has two connecting stubs. Thus, in a simple manner, a circulation circuit can be realized which can be easily and rapidly effected at any desired moment.

In an effective and efficient manner, a solid connection between the driven pile and the connecting piece can be realized when the connecting piece has a part reaching into the hollow driven pile. This also offers the possibility for an optimal connection of the separating means, which can also be formed by a rigid pipe instead of by a flexible hose.

An optimal connection of the connecting piece to, on one side, the inner wall of the cavity within the driven pile and, on the other, the separating means, can be obtained, according to a further embodiment of the invention, when the part reaching into the hollow driven pile comprises a ring-shaped chamber, which, on one side, is in communication with one of the connecting stubs, while the other connecting stub extends uninterruptedly through that chamber and terminates in the cavity. The ring-shaped chamber can be connected with the hollow driven pile while being centered via cams or a collar, while the separating means can connect to the ring-shaped chamber.

The costs of a driven pile according to the invention are, as mentioned, in the order of those of a traditional solid driven pile, while that driven pile, as to its supporting function, is equivalent to the traditional, solid driven pile. If, what is more, according to a further embodiment of the invention, that driven pile is further provided with a cylindrical cavity and an outer circumference which, viewed in cross section, is hexagonal or multiangular, the possible diameter of the cavity; while maintaining the bearing capacity, becomes twice as large as in a customary driven pile with a square cross section and a cast-in plastic pipe, so that the efficiency of the heat transfer can be considerably increased.

To come to an optimal use of the driven pile according to the invention, it is preferably used in a foundation construction provided with prefab foundation beams and driven piles, wherein each foundation beam, at the location of the at least one driven pile, is provided with a continuous opening extending in axial direction of the driven pile, and a channel departing therefrom and terminating in a side surface of the foundation beam, the connecting piece with its at least one connecting stub reaching from the driven pile through the opening to the channel, the opening and the channel being filled around the connecting piece with a filling material which may or may not be reinforced, the arrangement being such that each connecting stub is and remains accessible from the outer side of the foundation beam. It is possible to have the length of the channel correspond to the thickness of the foundation beam at the location of the opening. However, it is also possible that the channel extends into the opening to the location where the connecting piece closes off the hollow driven pile. If the foundation beams are manufactured in situ, with a connecting piece which is formed slightly differently, a similar channel can be realized.

Then the driven pile can for instance be used in the foundation construction of a building or a series of coupled buildings, such as houses which, in floors, walls and/or ceilings are provided with a pipe system for heating purposes, through which a fluid is to flow. Such a pipe system can be fed with a fluid coming from a boiler or such installation, such as a heat pump, for influencing the temperature of the fluid. If at first, for whatever reason, it is decided not to use a heat pump installation with the driven pile included therein as an energy pile, then this remains possible at any later moment with a driven pile according to the invention. Also, if such a pipe system and a heat pump installation are only installed later on, the driven pile can still be used as an energy pile.

A different use of the driven pile according to the invention is the use in the foundation construction of a road surface, which is composed of modules bearing on the foundation and being provided with a pipe system through which a fluid is to flow, so that in summer, the road surface can be cooled and in winter, it can be heated, i.e. be kept clear of ice. Here, the energy pile according to the invention has the additional advantage that when the respective module is damaged, it can be uncoupled from the energy piles and be replaced with a new module. Also, malfunctions resulting from warp of the road surface or other causes can be repaired. Naturally, when using driven piles according to the invention it is also possible to replace a module initially not provided with a pipe system, with a module which does include a pipe system and thereupon still use the driven pile as an energy pile. Further, for feeding a pipe system in a module, use can be made of driven piles according to the invention used in the foundation of auxiliary constructions in roads, such as baffles, bridges, viaducts and other artefacts.

With reference to the embodiments represented in the drawings, the driven pile according to the invention used in a foundation construction will presently be discussed in further detail, albeit only as a non-limitative example. In the drawing:
Fig. 1 shows a first embodiment of a driven pile according to the invention in cross section;
Fig. 2 shows a second embodiment of a driven pile according to the invention in cross section; and
Fig. 3 shows a cross section along the line III-III of Fig. 2.

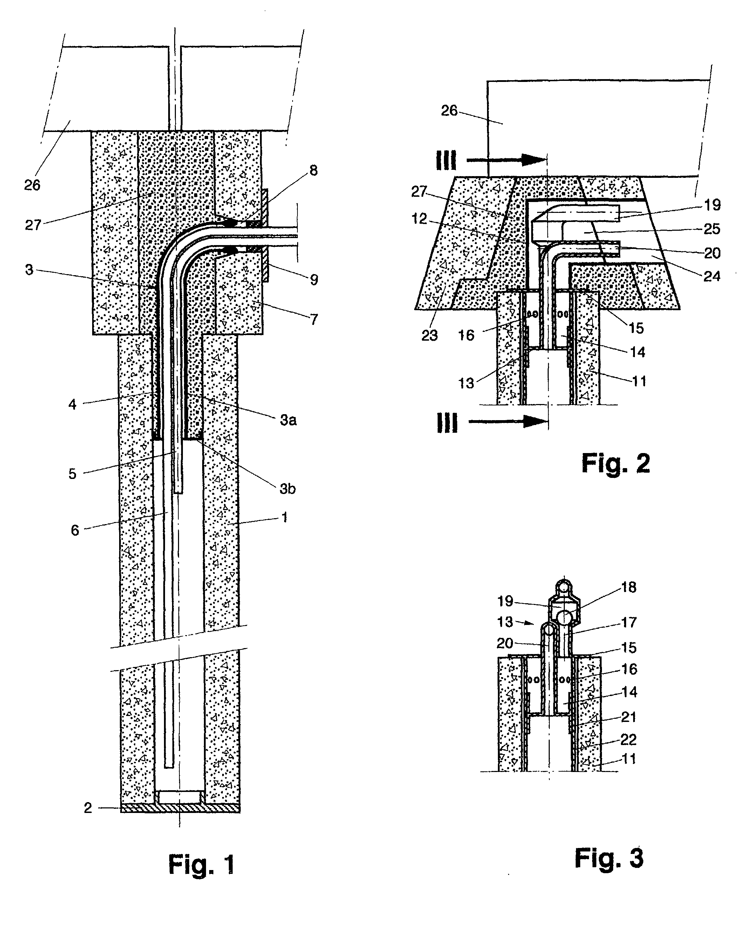

In Fig. 1, a hollow, concrete driven pile 1, driven into the ground is represented which has been manufactured with the aid of an extrusion method. For driving it into the ground, the driven pile is provided at its bottom side with a closing plate 2, it being noted that closure can also be effected in a different manner, for instance by using a concrete plug. Preferably, the driven pile is driven to just below the desired level. In situations wherein this is not possible, the driven pile is manually cut off to the desired level, while a plug prevents residues from falling into the cavity. At the upper side, the hollow driven pile 1 is closed off by a connecting piece 3, which is provided with a knee-shaped shaft part 3a and a bottom part 3b.The bottom part 3b is dimensioned such that it sealingly connects to the inner wall of the hollow driven pile 1. On the driven pile 1 rests a foundation beam 7 which, at the location of the driven pile 1, is provided with a continuous opening extending in vertical direction, from which a channel 8 extends, terminating in a side face of the foundation beam 7. Starting from the bottom part 3b, the shaft part 3a forms an enclosed passage 4 through the continuous opening in the foundation beam 7 into the channel 8. After fitting the connecting piece 3 in the position shown in Fig. 1, the space around the shaft part 3a above the bottom plate 3b and in the foundation beam 7 has been filled with a filling material 27, such as reinforced concrete mortar. At its mouth in the outer side face of the foundation beam 7, the channel 8 is finished with a flange 9, in which a closing element can be fitted when the driven pile 1 is not used as an energy pile. If, however, this is contemplated, this can be effected by leading two fluid ducts 5 and 6 via the flange 9 and the channel 8 into the passage 4. The cross section of the shaft part 3a can be adapted to the outer diameters of the ducts 5 and 6, but often this cross section will have a round, oval or multi-angular cross section, wherein the space between the shaft part 3a and the ducts 5 and 6, if desired, at least partly, for instance from the flange 9, can be filled with a closing filling material.

The duct 5 ends at a relatively short distance below the bottom surface of the bottom part 3b, while the duct 6 extends to a point near the closing plate 2. By connecting the ducts 5 and 6 to a heat pump installation (not represented), a fluid can be added via the duct 6 to the interior of the hollow driven pile 1, which fluid, after leaving the duct 6 and during upward flow through the hollow driven pile 1, exchanges heat with the surroundings, the hollow driven pile 1 functioning as a heat exchanger. The fluid can be discharged again from the interior of the hollow driven pile 1 via the duct 5. Thus, the hollow driven pile 1 can also, i.e. in addition to its supporting function proper, be used as an energy pile in, in particular, low temperature systems, such as floor, wall, ceiling, road surface heating or cooling or the like.

In Fig. 1, the driven pile 1 is represented in an active embodiment as energy pile. If, at least initially, the driven pile is not intended to serve as an energy pile, then, and substantially without additional costs compared with customary solid driven piles, the optional subsequent use as energy pile can be prepared by providing the hollow driven pile 1 with the connecting piece 3 and having it terminate in the channel 8, which can be closed with a plug at the flange 9. What is thus provided is a preparatory connecting stub for later providing the ducts 5 and 6, which can then be pushed via the connecting piece 3 into the hollow driven pile 1 to the desired depth.

Another possibility is to have the ducts 5 and 6 terminate in or adjacent to the flange 9 and to provide them with means which enable later coupling of ducts. Such an embodiment is preferred with an adapted construction, such as it is represented in the embodiment as discussed hereinbelow and represented in Figs. 2 and 3.

Fig. 2 represents a hollow concrete driving pile 11, again manufactured with an extrusion method, which, adjacent its bottom side, in a manner not represented but corresponding to the manner as represented in Fig. 1, is closed by a plate or the like. It is noted that closure is not only necessary for the design of the driven pile as an energy pile, but is also preferred to enable the driven pile to be driven into the ground in a suitable manner.

On the driven pile 11, a connecting piece 13 is placed, provided with a cylinder-shaped ring chamber 14, which, by means of a flange edge 15, rests on the upper side of the driven pile 11. The outside diameter of the cylinder-shaped chamber 14 is chosen to be smaller than the inner diameter of the hollow driven pile 11, such that the interior of the cylinder-shaped chamber 14, via openings 16 provided in the circumferential wall thereof, is in communication with the interior of the hollow driven pile 11. The cylinder-shaped chamber 14 is further provided with an outlet 17 which can be closed off by means of a ball 18 functioning as a check valve (see Fig. 3), located in a connecting stub 19 connecting to the outlet 17. A second connecting stub 20 reaches uninterruptedly through the cylinder-shaped chamber 14 and terminates in the interior of the hollow driven pile 11.

To obtain a fluid circuit flowing through the entire interior space in the hollow driven pile 1, the cylinder-shaped chamber14 is provided at its bottom side with a circumferential collar 21, which serves as a fastening means for a conduit 22 which, like the duct 6 in Fig. 1, extends to a point near the lower closure of the hollow driven pile 11. Thus, a fluid supplied via the connecting stub 20 flows through the interior of the conduit 22 to a point near the bottom end of the driven pile and then back through the relatively narrow ring-shaped space between the outer side of the conduit 22 and the inner side of the hollow driven pile 11. By giving the ring-shaped space mentioned a relatively narrow passage relative to the passage of the conduit 22, also because of the fairly rough inner wall of the hollow driven pile 11, a relatively high reflux speed in a turbulent flow environment is obtained, which optimizes the heat exchange with the surroundings.

Above the flange 15, the connecting piece 13 is surrounded at a distance by a knee-shaped pipe construction 12, which is placed, at the location of the driven pile 11, in a continuous, vertically extending hat-shaped opening in a foundation beam 23 to which a laterally extending channel 24 connects, which terminates in the outer side face of the foundation beam 23.The knee-shaped pipe construction 12 reaches from the flange 15 through the opening in the foundation beam 23 into the channel 24 and thus forms an open space 25 via which the connecting stubs 19 and 20 are accessible so that, at any desired moment, fluid ducts (not shown) can be connected thereto or guided therethrough. The remaining space of the continuous opening in the foundation beam 23 above and next to the flange 15 is filled with a filling material 27, such as concrete mortar.

The foundation beam carries a further construction element 26. This can be, for instance, a floor and/or a wall and/or a ceiling of a building or house, in (or on) which construction element a pipe register of a space heating is (or can be) provided, wherein heat extracted from the surroundings via the energy pile and the heat pump installation can be supplied to the pipe register for heating the interior space. Naturally, also, the reverse can occur, i.e. for cooling the interior space, extracting heat from it and discharging it via the energy pile to the surroundings.

A different promising use is, on the one hand, extracting heat from road surfaces and, on the other hand, keeping them clear of ice by heating. First, roads can be considered which are composed of modular parts which are supported by pile driven foundations. By providing the modular parts of the road surface with a pipe register and designing the driven piles for the foundation as energy piles, the road surface can be heated so as to keep it clear from ice. Since for keeping clear of ice, a lower temperature of the fluid in the pipes is required than for keeping a room in a building or house at a (higher) temperature, there is no need for a complicated heat pump installation and a simple circulation system will suffice. To have energy available, in winter, under extreme weather conditions, during a short period of time, electric heating elements can be included in that circuit. What can also be considered to obtain such an effect (peak capacity) is to control or partly control the temperature via driven piles designed as energy piles, for the foundation of baffles, bridges, viaducts and such artefacts.

Conversely, naturally, on warm days heat can be extracted from the road surface, so that that surface remains cooler. Thus, the life span of asphalt roads can be considerably prolonged. The extracted heat is stored underground via the energy piles for thus supplementing the heat extracted in winter and/or for forming an extra buffer.

The great advantage of the use of driven piles according to the present invention is that, in fact, without extra costs for realizing the foundation, a construction equipped for use as heat exchanging system can be obtained, while at any desired moment during the life span of the construction, it is possible to decide and to proceed to effectively use the driven piles as energy piles, so that, also at a later date, the system can still be used, even if presently it does not yet seem economically profitable.

It is self-evident that, within the framework of the invention as laid down in the accompanying claims, many modifications and variants are possible in addition to the embodiments discussed hereinabove. Although, each time, a driven pile was discussed, it will be clear that a series of driven piles is preferred which are, for instance, coupled in a parallel manner, although a series connection of a few units is also possible. In connection therewith, it might be preferred to design a connecting piece with two oppositely located lateral openings, wherein the one fluid duct enters through the one opening and the other fluid duct exits via the other opening. The preferred fluid to be used is water, this water having the same pressure as the surroundings, but also other fluids, for instance with a lowered freezing point, and other pressures are very well possible.

## Claims

1. A geothermal pile (1) provided with a cavity extending in axial direction, closed at both ends and suitable for creating a circulating fluid flow in the cavity through separating means (5,6), such as pipes or hoses, to be provided over at least a substantial part of the length of the cavity and which can be coupled to a fluid circulation circuit located outside the pile (1), which pile (1) is designed as a hollow driven pile (1), **characterized in that** the pile (1) is manufactured from concrete with the aid of an extrusion method, which at one end (2) is permanently closed and at the other end carries a connecting piece (3) closing the cavity, which connecting piece (3) can serve for the connection with a foundation (7) of a building and is provided with at least one connecting stub which, on one side, is in communication with the cavity and on the other side terminates at an angle, which is preferably 90°, relative to the axial direction of the driven pile (1) beyond the end and near or outside the imaginary prolonged circumferential surface of the driven pile (1).

2. A geothermal pile (1) according to claim 1, **characterized in that** the connecting stub terminates substantially at a right angle to the axial direction of the driven pile (1).

3. A geothermal pile (1) according to claim 1 or 2, **characterized in that** the connecting piece (3) has two connecting stubs (19,20).

4. A geothermal pile (1) according to claim 3, **characterized in that** the connecting piece (3) has a part reaching into the hollow driven pile (1).

5. A geothermal pile (1) according to claims 3 and 4, **characterized in that** the part reaching into the hollow driven pile comprises a ring-shaped chamber (14), which, on one side, is in communication with one of the connecting stubs (19,20), while the other connecting stub (19,20) reaches uninterruptedly through said chamber (14) and terminates in the cavity.

6. A geothermal pile (1) according to any one of the preceding claims, **characterized in that** it is provided with a cylindrical cavity and an outer circumference which, in cross section, is hexagonal or multi-angular.

7. A foundation construction provided with at least one foundation beam (7) carried by at least one geothermal driven pile (1) according to any one of the preceding claims, **characterized in that** each foundation beam (7) at the location of the at least one driven pile (1) is provided with a continuous opening extending in axial direction of said driven pile (1) and a channel extending therefrom, terminating in a side face of the foundation beam (7), wherein the connecting piece (3) with its at least one connecting stub extends from the driven pile (1) through the opening towards the channel, wherein the opening and the channel around the connecting piece (3) are filled with a reinforced or non-reinforced filling material (27), the arrangement being such that each connecting stub is accessible from the outside of the foundation beam (7).

8. A foundation construction according to claim 7, **characterized in that** the channel extends into the opening as far as the location where the connecting piece (3) closes the hollow driven pile (1).

9. A geothermal driven pile (1) according to any one of claims 1 - 6 for a foundation, whether or not according to claim 7 or 8, for a road surface, which is composed of modules resting on the foundation and are provided with a pipe system, forming part of a fluid circulation circuit located outside the driven pile (1).

10. A geothermal driven pile (1) according to any one of claims 1 - 6 for a foundation, whether or not according to claim 7 or 8, for auxiliary constructions at a road, such as baffles, bridges, viaducts and other artefacts, wherein the cavity in the driven pile (1) is connected to a pipe system, forming part of the fluid circulation circuit located outside the driven pile (1) and being accommodated in a module for forming a road surface together with a series of further modules, or forming part of the fluid circulation circuit located outside the driven pile (1) in a building located adjacent the road.

11. A geothermal driven pile (1) according to any one of claims 1 - 6 for a foundation, whether or not according to claim 7 or 8, of a building or a series of coupled buildings, such as houses, being provided in floors, walls and/or ceilings with a pipe system through which a fluid is to flow, forming part of the fluid circulation circuit located outside the driven pile (1).

## Patentansprüche

1. Ein geothermischer Pfahl (1), mit einem sich in axialer Richtung erstreckenden Hohlraum, an beiden Enden verschlossen, geeignet zur Erzeugung einer Zirkulation eines Fluids in dem Hohlraum mit Hilfe von trennenden Elementen (5,6), insbesondere Rohren oder Schläuchen, welche sich zumindest über einen beträchtlichen Anteil der Länge des Hohlraums erstrecken und welche an ein Fluid-Kreislaufsystem angeschlossen werden können, das sich außerhalb des Pfahls (1) befindet, wobei der Pfahl (1) als ein hohler eingetriebener Pfahl ausgeführt ist,
**dadurch gekennzeichnet,**
**dass** der Pfahl (1) aus Beton hergestellt ist, mit Hilfe eines Extrudierungsverfahrens, an einem Ende (2) permanent verschlossen ist und an dem anderen Ende ein Verbindungsstück (3) trägt, welches den Hohlraum abschließt, wobei das Verbindungsstück (3) zur Verbindung mit einem Fundament (7) eines Bauwerks dienen kann und zumindest eine Verbindungsleitung aufweist, welche an einer Seite in Verbindung mit dem Hohlraum steht und an der anderen Seite in einem Winkel endet, der vorzugsweise 90° relativ zur axialen Richtung des eingetriebenen Pfahls (1 ) beträgt, außerhalb des Endes und nahe oder außerhalb der imaginären verlängerten Umfangsoberfläche des eingetriebenen Pfahls (1 ).

2. Ein geothermischer Pfahl (1) nach Anspruch 1,
**dadurch gekennzeichnet,**
**dass** die Verbindungsleitung im Wesentlichen in einem rechten Winkel zur axialen Richtung des eingetriebenen Pfahls (1) endet.

3. Ein geothermischer Pfahl (1) nach Anspruch 1 oder 2,
**dadurch gekennzeichnet,**
**dass** das Verbindungsstück (3) zwei Verbindungsleitungen (19,20) aufweist.

4. Ein geothermischer Pfahl (1) nach Anspruch 3,
**dadurch gekennzeichnet,**
**dass** das Verbindungsstück (3) einen Teil besitzt, der in den hohlen eingetriebenen Pfahl (1) hineinreicht.

5. Ein geothermischer Pfahl (1) nach den Ansprüchen 3 und 4,
**dadurch gekennzeichnet,**
**dass** der in den hohlen eingetriebenen Pfahl hineinreichende Teil eine ringförmige Kammer (14) besitzt, welche auf einer Seite in Verbindung mit einer der Verbindungsleitungen (19,20) steht, wohingegen die andere Verbindungsleitung (19,20) ohne Unterbrechung durch diese Kammer (14) geführt ist und in dem Hohlraum endet.

6. Ein geothermischer Pfahl (1) nach einem der vorhergehenden Ansprüche,
**dadurch gekennzeichnet,**
**dass** er mit einem zylinderförmigen Hohlraum und einer äußeren Peripherie versehen ist, wobei die äußere Peripherie im Querschnitt hexagonal oder vieleckig ist.

7. Ein Fundamentbauwerk, bei welchem zumindest ein Träger des Fundaments (foundation beam) (7) durch zumindest einen geothermischen eingetriebenen Pfahl (1) nach einem der vorhergehenden Ansprüche getragen wird,
**dadurch gekennzeichnet,**
**dass** jeder Träger des Fundaments an der Stelle des zumindest einen eingetriebenen Pfahls (1) mit einer durchgängigen Öffnung in axialer Richtung des eingetriebenen Pfahls (1) und einem davon ausgehenden Kanal versehen ist, der an einer Seitenfläche des Trägers des Fundaments (7) endet, wobei sich das Verbindungsstück (3) mit seiner zumindest einen Verbindungsleitung von dem eingetriebenen Pfahl (1) durch die Öffnung zu dem Kanal hin erstreckt, wobei die Öffnung und der Kanal im Bereich des Verbindungsstücks (3) mit einem verstärkten oder nicht verstärkten Füllmaterial (27) gefüllt sind, und wobei die Anordnung derart gewählt ist, dass jede Verbindungsleitung von außerhalb des Trägers des Fundaments (7) zugänglich ist.

8. Ein Fundamentbauwerk nach Anspruch 7,
**dadurch gekennzeichnet,**
**dass** der Kanal sich bis zu der Stelle in die Öffnung erstreckt, an der das Verbindungsteil (3) den hohlen eingetriebenen Pfahl (1) abschließt.

9. Ein geothermischer eingetriebener Pfahl (1) nach einem der Ansprüche 1-6, für ein Fundament, gemäß einem der Ansprüche 7 oder 8 oder auch nicht, für eine Straßendecke, welche aus auf dem Fundament ruhenden Modulen besteht, welche mit einem Rohrsystem versehen sind, welches Teil eines Fluid-Kreislaufsystems ist, das außerhalb des eingetriebenen Pfahls (1) angeordnet ist.

10. Ein geothermischer eingetriebener Pfahl (1) nach einem der Ansprüche 1-6 für ein Fundament, gemäß einem der Ansprüche 7 oder 8 oder auch nicht, für Straßenhilfsbauwerke wie Einbauten, Brücken, Viadukte und anderen Artefakten, wobei der Hohlraum in dem eingetriebenen Pfahl (1) an ein Rohrsystem angeschlossen ist, welches Teil eines Fluid-Kreislaufsystems ist, das außerhalb des eingetriebenen Pfahls (1) angeordnet ist und welches in ein Modul eingebettet ist, das eine Straßendecke zusammen mit weiteren Modulen bildet oder welches Teil eines Fluid-Kreislaufsystems ist, das außerhalb des eingetriebenen Pfahls (1) in einem Gebäude nahe der Straße angeordnet ist.

11. Ein geothermischer eingetriebener Pfahl (1) nach einem der Ansprüche 1-6, für ein Fundament, gemäß einem der Ansprüche 7 oder 8 oder auch nicht, eines Gebäudes oder einer Reihe von verbundenen Gebäuden, insbesondere Häuser, deren Böden, Wände und/oder Decken mit einem Rohrsystem versehen sind, durch welches ein Fluid geleitet wird, welches Teil des Fluid-Kreislaufsystems ist, welches sich außerhalb des eingetriebenen Pfahls (1) befindet.

## Revendications

1. Pieu géothermique (1) muni d'une cavité s'étendant dans une direction axiale, fermé au niveau des extrémités et adapté pour créer un écoulement de fluide circulant dans la cavité par l'intermédiaire de moyens de séparation (5, 6), tels que des tuyaux ou des tubes, devant être agencés sur au moins une partie importante de la longueur de la cavité, et qui peuvent être couplés à un circuit de circulation de fluide situé à l'extérieur du pieu (1), lequel pieu (1) étant conçu sous la forme d'un pieu battu creux (1), **caractérisé en ce que** le pieu (1) est fabriqué en béton à l'aide d'un procédé d'extrusion, lequel pieu est fermé de manière permanente à une première extrémité (2), et supporte un pièce de connexion (3) fermant la cavité à l'autre extrémité, laquelle pièce de connexion (3) peut servir pour la connexion avec une fondation (7) d'un bâtiment, et est munie d'au moins un premier tronçon de connexion qui, sur un premier côté, est en communication avec la cavité et se termine sur l'autre côté en faisant un angle, qui est de préférence de 90°, par rapport à la direction axiale du pieu battu (1) au-delà de l'extrémité, et à proximité ou à l'extérieur de la surface circonférentielle prolongée imaginaire du pieu battu (1).

2. Pieu géothermique (1) selon la revendication 1, **caractérisé en ce que** le tronçon de connexion se termine sensiblement à angle droit par rapport à la direction axiale du pieu battu (1).

3. Pieu géothermique (1) selon la revendication 1 ou 2, **caractérisé en ce que** la pièce de connexion (3) comporte deux tronçons de connexion (19, 20).

4. Pieu géothermique (1) selon la revendication 3, **caractérisé en ce que** la pièce de connexion (3) a une partie s'étendant dans le pieu battu creux (1).

5. Pieu géothermique (1) selon les revendications 3 et 4, **caractérisé en ce que** la partie s'étendant dans le pieu battu creux comporte une chambre en forme d'anneau (14) qui, sur un premier côté, est en communication avec un des tronçons de connexion (19, 20), tandis que l'autre tronçon de connexion (19, 20) s'étend de manière ininterrompue à travers ladite chambre (14) et se termine dans la cavité.

6. Pieu géothermique (1) selon l'une quelconque des revendications précédentes, **caractérisé en ce qu'**il est muni d'une cavité cylindrique et d'une circonférence extérieure qui, en coupe transversale, est hexagonale ou a de multiples angles.

7. Construction de fondation munie d'au moins une poutre de fondation (7) supportée par au moins un pieu battu géothermique (1) selon l'une quelconque des revendications précédentes, **caractérisée en ce que** chaque poutre de fondation (7) est munie, au niveau de l'emplacement du au moins un pieu battu (1), d'une ouverture continue s'étendant dans la direction axiale dudit pieu battu (1), et d'un canal s'étendant à partir de celle-ci, se terminant dans une face latérale de la poutre de fondation (7), dans laquelle la pièce de connexion (3) munie de son au moins un tronçon de connexion s'étend à partir du pieu battu (1) à travers l'ouverture vers le canal, dans laquelle l'ouverture et le canal autour du la pièce de connexion (3) sont remplis avec un matériau de remplissage renforcé ou non-renforcé (27), l'agencement étant tel que chaque tronçon de connexion est accessible à partir de l'extérieur de la poutre de fondation (7).

8. Construction de fondation selon la revendication 7, **caractérisée en ce que** le canal s'étend dans l'ouverture jusqu'à l'emplacement où la pièce de connexion (3) ferme le pieu battu creux (1).

9. Pieu battu géothermique (1) selon l'une quelconque des revendications 1 à 6, destiné à une fondation, selon la revendication 7 ou 8 ou pas, destinée à une chaussée, qui est constitué de modules en appui sur la fondation et munis d'un système de tuyau, en formant une partie d'un circuit de circulation de fluide situé à l'extérieur du pieu battu (1).

10. Pieu battu géothermique (1) selon l'un quelconque des revendications 1 à 6 destiné à une fondation, selon la revendication 7 ou 8 ou pas, destinée à des constructions auxiliaires au niveau d'une route, telles que des déflecteurs, des ponts, des viaducs et autres ouvrages d'art, dans lequel la cavité située dans le pieu battu (1) est reliée à un système de tuyau, en formant une partie du circuit de circulation de fluide situé à l'extérieur du pieu battu (1), et étant reçu dans un module pour former une chaussée avec une série de modules supplémentaires, ou en formant une partie du circuit de circulation de fluide situé à l'extérieur du pieu battu (1) dans un bâtiment situé adjacent à la route.

11. Pieu battu géothermique (1) selon l'un quelconque des revendications 1 à 6 destiné à une fondation, selon la revendications 7 ou 8 ou pas, d'un bâtiment ou d'une série de bâtiments couplés, comme des maisons, qui est agencé dans des sols, murs/ou plafonds avec un système de tuyau à travers lequel s'écoule un fluide, en formant une partie du circuit de circulation de fluide situé à l'extérieur du pieu battu (1).
